Europäisches Patentamt

European Patent Office

Office européen des brevets

(19)

(11) **EP 0 981 808 B1**

(12) **FASCICULE DE BREVET EUROPEEN**

(45) Date de publication et mention
de la délivrance du brevet:
**29.08.2001 Bulletin 2001/35**

(21) Numéro de dépôt: **98917212.7**

(22) Date de dépôt: **20.03.1998**

(51) Int Cl.⁷: **G07F 17/32**, G07F 7/08

(86) Numéro de dépôt international:
**PCT/FR98/00582**

(87) Numéro de publication internationale:
**WO 98/47113 (22.10.1998 Gazette 1998/42)**

(54) **PROCEDURE SECURISEE DE CONTROLE DE TRANSFERT D'UNITES DE VALEUR DANS UN SYSTEME DE JEU A CARTES A PUCE**

GESICHERTES VERFAHREN ZUM ÜBERWACHEN DER ÜBERTRAGUNG VON WERTEINHEITEN IN EINEM SPIELSYSTEM MIT CHIPKARTEN

SECURITY PROCEDURE FOR CONTROLLING THE TRANSFER OF VALUE UNITS IN A CHIP CARD GAMING SYSTEM

(84) Etats contractants désignés:
**AT BE CH DE DK ES FI FR GB IT LI NL PT SE**

(30) Priorité: **11.04.1997 FR 9704733**

(43) Date de publication de la demande:
**01.03.2000 Bulletin 2000/09**

(73) Titulaire: **GEMPLUS**
**13881 Gémenos Cédex (FR)**

(72) Inventeurs:
• **ORUS, Hervé**
  **F-13470 Carnoux en Provence (FR)**
• **FOGLINO, Jean-Jacques**
  **F-13790 Peynier (FR)**

(56) Documents cités:
**EP-A- 0 589 545          EP-A- 0 619 564**
**EP-A- 0 762 333          WO-A-93/17403**
**WO-A-96/08798          WO-A-97/02547**
**DE-A- 4 427 039**

Printed by Jouve, 75001 PARIS (FR)

## Description

La présente invention concerne le domaine des machines à sous, telles que les dispositifs de jackpot et les autres dispositifs de jeux d'argent individuels du type de ceux que l'on trouve dans les casinos.

Elle concerne plus particulièrement des machines à sous permettant d'enregistrer des mises et des gains avec des cartes de jeu. Les cartes de jeu sont du type carte à puce ou carte sans contact. Les cartes de jeu peuvent être dédiées à cette utilisation suivant l'exemple des cartes téléphoniques. Elles sont avantageusement constituées par des cartes bancaires, permettant de transférer des sommes d'argent directement sur la machine à sous.

La présente demande vise un procédé et un système de contrôle de transfert d'unités de valeur entre une pluralité de cartes de jeu et une pluralité de machines de jeu, chaque machine étant connectée à un transcripteur de données sur cartes de jeu apte à créditer et/ou à débiter des unités de valeur en mémoire d'une carte de jeu.

Un objectif général du contrôle de transfert d'unités de valeurs entre cartes de jeu et machines de jeu est d'éviter toute malversation financière à l'aide de telle cartes.

On connaît déjà des systèmes de gestion pour des machines de jeu équipées de lecteurs de cartes à puce, adaptés à la gestion d'un parc de machines de jeux disposées dans des sites relativement fermés et contrôlés comme les casinos. Ces systèmes sont adaptés à un tel environnement, car ils font l'objet de contrôles et de réglementations importants, peu susceptibles de permettre des fraudes sur les transactions de jeux utilisant des cartes à puce.

Le document EP-A-0 360 613 décrit par exemple un système de transfert de données entre carte à puce et une pluralité de machines avec des moyens de transmission et de stockage des données machine dans la carte à puce. Un tel système permet d'effectuer un relevé des opérations de jeu avec une carte de collecte stockant une liste des opérations de jeux effectuées dans un but comptable ou fiscal.

Un inconvénient d'un tel système est qu'on ne peut pas contrôler toutes les opérations de jeu effectuées, sauf à relever toutes les machines avec la carte de collecte, ce qui occasionne des manipulations fastidieuses.

D'autre part, devant la demande croissante du public, il est envisagé d'installer des machines de jeu dans des sites moins protégés que les casinos comme des salles de jeux privées ou des bars, voire même dans des lieux d'habitation privés comme le domicile des joueurs.

Il apparaît clairement qu'une telle dispersion des machines de jeu pose d'importants problèmes de sécurité des transactions suite aux opérations de jeu.

Le document WO-A-93 17403 décrit un système de machines à sous reliées en réseau avec un central de gestion, chaque machine étant connectée à lecteur de cartes magnétiques ou de cartes à puce. Chaque carte mémorise un numéro d'identification correspondant à un code secret et à un compte de crédit géré par le central. Le système permet de transmettre sur le réseau le numéro d'identification de la carte et le code secret du joueur au central de gestion qui transfére en retour les données de crédit à la machine pour permettre les opérations de jeu.

Ce système a l'inconvénient de ne prévoir aucun moyen pour stocker des données financières en mémoire d'une carte, ni pour assurer la sûreté des échanges de données financières de jeu sur le réseau, ce qui limite pratiquement la diffusion de cartes et l'extension du système à une maison de jeux.

Un but de l'invention est de permettre un développement des machines de jeu fonctionnant avec des cartes à puce dans des lieux non protégés.

Un autre but de l'invention est de renforcer l'intégrité des systèmes de machines de jeux fonctionnant avec des cartes de jeu.

L'invention prévoit que les machines de jeu sont reliées en réseau avec un organe central de gestion. Selon l'invention on a prévu que l'organe central de gestion comporte une base de données, dans laquelle sont stockées des informations correspondantes à celles stockées sur les cartes de jeu comme des informations sur le joueur ainsi que des données d'identification des cartes et des données renseignant sur le solde de la valeur stockée dans la carte. Une vérification des données de la carte par rapport aux données de la base de l'organe central de gestion permet d'assurer l'intégrité d'un tel système de machines de jeu fonctionnant avec des cartes à puce ou des cartes sans contact.

L'invention prévoit ainsi un procédé sécurisé de contrôle de transferts d'unités de valeur entre une pluralité de cartes de jeu et une pluralité de machines de jeu, chaque machine étant connectée à un transcripteur de données sur carte de jeu, les machines étant reliées en réseau sécurisé avec un organe central de gestion par l'intermédiaire de moyens de liaison, le procédé comportant des étapes consistant, au cours d'une opération de jeu, à :

- lire des données en mémoire d'une carte de jeu, notamment un numéro d'identification de la carte et des données représentatives des unités de valeur débitées et/ou créditées au cours des opérations de jeu précédentes,
- échanger des données entre la machine et une base de données de l'organe central de gestion par l'intermédiaire des moyens de liaison du réseau sécurisé, notamment des données représentatives de solde des unités de valeur et/ou le numéro d'identification de la carte ; et,
- vérifier que les données en mémoire de la carte de jeu correspondent aux données de la base de données afin de contrôler l'intégrité d'un système constitué par une telle carte, une telle machine, le réseau et l'organe central de gestion.

L'invention prévoit avantageusement des moyens de sécurisation qui permettent d'authentifier les messages de données échangées sur le réseau, c'est-à-dire de signer de tels messages.

L'invention prévoit en outre un système sécurisé de contrôle de transferts d'unités de valeur entre une pluralité de cartes de jeu et une pluralité de machines de jeu, chaque machine étant pourvue d'un transcripteur apte à débiter des unités de valeur d'une carte de jeu, les machines étant reliées en réseau sécurisé avec un organe central de gestion par l'intermédiaire de moyens de liaison, une carte de jeu stockant en mémoire des données représentatives d'opérations de jeu effectuées, notamment des données d'identification de la carte et des données représentatives de solde des valeurs débitées et/ou créditées au cours des opérations de jeu précédentes, caractérisé en ce que l'organe central de gestion comporte une base de données stockant parallèlement en mémoire les données représentatives des opérations de jeu effectuées, notamment les données d'identification des cartes et les données représentatives des soldes des valeurs débitées et/ou créditées au cours des opérations de jeu précédentes et en ce que des moyens de contrôle vérifient que, pour une carte identifiée, les données de la base et les données de la carte correspondent, notamment que les données représentatives du solde correspondent, afin de vérifier l'intégrité du système.

Un module de sécurisation pour l'authentification des messages de données peut avantageusement être prévu dans le réseau, au niveau d'un transcripteur, d'une machine, de l'organe central, ou même des moyens de liaison du réseau.

L'invention sera mieux comprise à la lecture de la description et des dessins qui suivent, donnés uniquement à titre d'exemples non limitatifs ; sur les dessins annexés :

- la figure 1 représente un système sécurisé de contrôle de transfert d'unités de valeurs entre une pluralité de cartes de jeu et une pluralité de machines de jeu apte à mettre en oeuvre l'invention ;
- la figure 2 représente un schéma d'échange et de vérification des données selon l'invention ; et,
- la figure 3 représente un calcul de certificat d'authentification par des moyens de sécurisation selon l'invention.

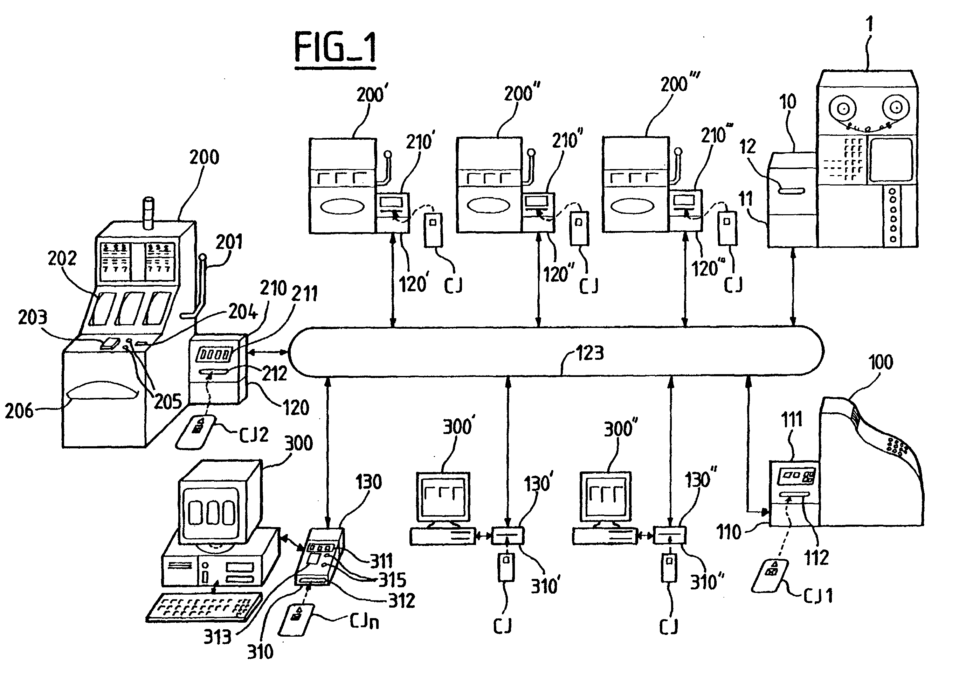

Sur la figure 1 on a représenté un système sécurisé de machines de jeu tel que proposé par l'invention, et qui comprend une ou plusieurs machines de jeu 200, 200', 200" et 200"'.

Une telle machine de jeu 200, semblable aux machines à sous que l'on trouve dans les casinos dispose d'un monnayeur électronique 210 que l'on appellera par la suite transcripteur de données sur carte de jeu CJ.

Le transcripteur de données sur carte 210 est relié à l'électronique de la machine 200, par exemple par une liaison série de type RS 485. La machine et le lecteur comportent des interfaces entrée-sortie adaptées à cette liaison.

De façon classique, la machine est équipée d'un écran d'affichage 211 qui permet aux joueurs de savoir à tout instant quel est le solde dont il dispose pour jouer et le montant des mises et des gains réalisés.

La machine 200 qui a été représentée peut bien sûr être une machine à monnayeur électronique exclusivement, mais aussi une machine à double monnayeur, c'est-à-dire une machine qui comporte outre ce monnayeur électronique, un monnayeur à pièces (ou à jetons) symbolisé par la référence 201.

Dans le cas d'une machine à double monnayeur, le joueur aura la possibilité de jouer avec des pièces ou jetons et de se faire restituer ses gains uniquement sous la forme de pièces.

Les cartes de jeu CJ représentées sous forme de cartes à puce comportent une mémoire morte effaçable électriquement, par exemple une mémoire de type EEPROM.

Il peut s'agir également de cartes à puce comportant un microprocesseur, une mémoire de programmes et une mémoire de travail de type RAM.

Ces cartes à puce peuvent également être des cartes à chargement d'unités de type rechargeable. Ces cartes comportent pour cela une mémoire électriquement programmable du genre boulier.

En outre les cartes de jeu peuvent être constituées par des cartes sans contact, la carte comportant un circuit intégré à mémoire et microprocesseur, et un circuit électronique de transmission de données sans contact électrique. On peut par exemple utiliser un transpondeur tel que décrit dans la demande de brevet FR - 96 16061.

La réalisation des machines de jeu 200 et leur connexion à des transcripteurs de données sur cartes de jeu ne sera pas détaillée ici. Des exemples de réalisations de machines de jeu sont détaillés par exemple dans la demande de brevet FR - 96 10031 dont la description est incorporée à la présente.

Afin de contrôler les opérations de jeux et les transactions avec les cartes, il est prévu de relier les machines 200, 200', 200", 200"' en réseau, avec un organe central de gestion représentés sous la référence 1 à la figure 1. Les machines du réseau sont reliées à l'organe central de gestion 1 par des moyens de liaison 123. Comme représentées à la figure 1, les machines 200, 200', 200", 200' " peuvent également être reliées entre elles par le réseau.

Les moyens de liaison 123 sont constitués dans le cas d'un réseau local comme celui d'un casino par une liaison locale. La liaison locale est par exemple une liaison série de type RS 485, un bus de liaison parallèle , une fibre optique, une liaison radio ou tout autre support de transmission.

Dans le cas d'un réseau joignant des salles de jeu dispersées, les moyens de liaisons peuvent être constitués par des canaux de transmission propres au réseau ou par des lignes téléphoniques.

Pour établir des liaisons téléphoniques, le réseau comporte des modulateurs-démodulateurs de type MODEM 120, 120', 120" et 120''', disposés en interface entre les moyens de liaison 123 et une machine de jeux 200, 200', 200", 200''' respectivement.

L'organe central de gestion 1 est constitué par exemple d'un ordinateur central relié également aux moyens de liaison 123 par un MODEM 101 de façon à faire partie du réseau.

Sur la figure 1 on a représenté des moyens de liaison 123 sous la forme schématique d'une ligne annulaire à laquelle les machines de jeux 200, 200', 200" et 200''' sont connectées. Les machines sont ainsi reliées entre elles et à l'organe central de gestion 1. La liaison peut cependant prendre toutes sortes de formes équivalentes.

Dans le cas de liaisons téléphoniques, les machines sont reliées individuellement aux moyens centralisés de gestion, les machines n'étant pas nécessairement reliées entre elles. Le MODEM 11 des moyens de gestion 1 peut comporter avantageusement un standard de plusieurs lignes téléphoniques.

L'utilisation de liaisons téléphoniques présente l'avantage de permettre d'étendre le réseau au lieu d'habitation des joueurs. Les machines de jeux sont de préférence constituées par des ordinateurs personnels 300 et 300' de type PC. Les machines peuvent ainsi être connectées chacune à un transcripteur de données sur carte de jeu 310 ou 310' intégrant de préférence un MODEM 130 ou 130', par exemple du type "GEMTEL" commercialisé par la demanderesse.

Le réseau utilisé peut être notamment un réseau de communication ouvert du type "INTERNET".

Il est prévu en outre que le système et le réseau comportent au moins un terminal de chargement représenté à la figure 1 sous forme d'une caisse enregistreuse 100. Le terminal de chargement 100 comporte alors un transcripteur 110. Le terminal 100 et le transcripteur 110 sont alors reliés au réseau par l'intermédiaire d'un MODEM 111 connecté aux moyens de liaison 123.

Classiquement, il est prévu que les cartes à puce dédiées aux jeux sont des cartes non-rechargeables, à l'instar des cartes téléphoniques, et elles sont fabriquées et chargées uniquement par un organisme central.

Dans une application avec des cartes non-rechargeables, il est prévu que la base de données BD des moyens centralisés de gestion 1 dispose des soldes S1, S2, ..., Sn initiaux des valeurs créditées sur les cartes CJ1, CJ2, ..., CJn avant leur mise en circulation.

Cependant, selon une variante avantageuse, il est prévu que les cartes sont rechargées en unités de valeurs par l'intermédiaire de terminaux de chargement.

En pratique, ce terminal peut être celui d'un caissier du casino. De façon alternative, on peut prévoir une multitude de terminaux de chargements disposés dans des débits de tabac ou dans d'autres commerces accessibles aux joueurs.

Ainsi lorsqu'un joueur désire obtenir la délivrance d'un crédit, il donne sa carte de jeu CJ1 à l'opérateur habilité à utiliser le terminal 100 qui insère cette carte dans la partie transcripteur 110 de ce terminal 100 et qui au moyen du clavier de la caisse va rentrer le montant du crédit que désire avoir le joueur. Ce montant est transféré au transcripteur 110 qui enregistre alors sur la carte à puce CJ1 l'information significative correspondant au crédit désiré par le joueur.

Selon l'invention, le terminal de rechargement peut alors communiquer à l'organe central de gestion 1, par l'intermédiaire des moyens de liaison du réseau 123, les données lues sur la carte à recharger, notamment son numéro d'identification Id et son solde S d'unités de valeur. La vérification du numéro d'identification Id de la carte de jeu CJ1 peut être faite directement par le terminal de rechargement 100 ou par son transcripteur de données 110 ou de manière alternative par l'organe central de gestion 1. L'invention prévoit ainsi une étape préliminaire aux opérations de jeu, consistant à inscrire dans la base de données de l'organe central de gestion 1 et dans la mémoire d'une carte de jeu CJ1, des données représentatives d'une valeur de solde initial lors d'une opération préliminaire de chargement de la carte CJ1.

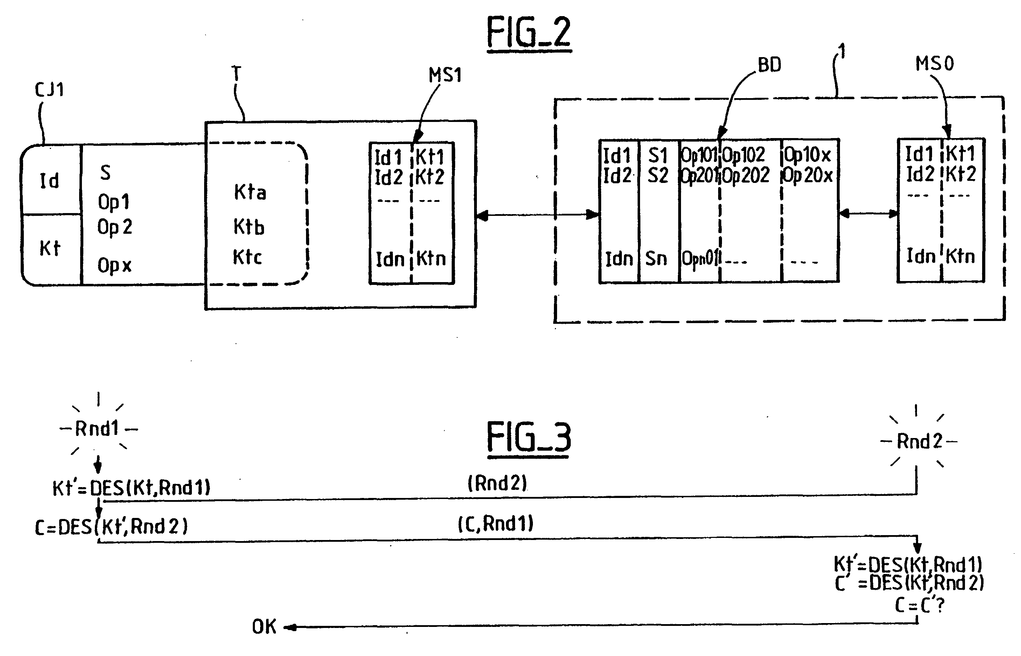

Selon la première alternative, il est prévu comme visible à la figure 2 que le terminal de rechargement ou son transcripteur T dispose des clefs d'identification secrètes Kt1, Kt2, ..., Ktn de toutes les cartes de jeu CJ1, CJ2, ..., CJn en circulation. Ces clés secrètes sont de préférence stockées dans un module de sécurisation MS1 comportant une mémoire et une unité de calcul, les données stockées n'étant pas accessibles de l'extérieur. Le terminal 100 vérifie alors que l'identification Id1 de la carte à puce CJ1 est correcte avec la clef Kt1 correspondante, en appliquant un algorithme d'authentification ou de cryptage selon les méthodes connues.

Selon la seconde alternative, cette authentification de la carte est effectuée au niveau de l'organe central de gestion 1, les numéros d'identification Id1,Id2,...,Idn et les clefs d'authentification correspondantes Kt1, Kt2, ..., Ktn étant stockées dans la base de données BD de l'organe central de gestion ou de préférence dans un module de sécurité MSO similaire à MS1. Cette seconde alternative présente l'avantage d'éviter toute dissémination des clefs d'authentification secrètes.

L'invention prévoit en outre un échange de données entre le terminal et l'organe central de gestion portant sur les données stockées dans la base de données de l'organe central de gestion 1. De préférence, cet échange de données est accompagné d'un certificat d'authentification. Un protocole de sécurisation permettant d'émettre de tels certificats sera détaillé ci-après. Ce protocole évite avantageusement qu'une machine parasite du réseau ne crédite abusivement la base de donnée. Le terminal T peut ainsi communiquer le solde S des valeurs débitées et/ou créditées précédemment sur la carte de jeu CJ1 à l'organe central de gestion 1. Après avoir authentifié le numéro d'identification Id1 de la carte ou le certificat accompagnant les données de solde, on peut ainsi vérifier que le solde S inscrit en mémoire de la carte de jeu CJ1 correspond bien au solde S1 stocké dans la base de données BD. Si la vérification est positive, il est prévu que l'organe central de gestion 1 émet un signal d'accord pour le rechargement de la carte CJ1 par le terminal et le transcripteur T. En cas de vérification négative, une procédure ou un signal d'alerte peuvent être mis en oeuvre au niveau de l'organe central de gestion 1, ou au niveau du terminal de chargement. Dans un réseau de machines à sous de casino par exemple, le caissier pourra être alerté par le terminal de chargement afin de découvrir l'origine d'un tel dysfonctionnement. Dans un réseau plus étendu, on peut prévoir que la carte CJ1 soit avalée par le transcripteur T du terminal afin d'enquêter sur le dysfonctionnement.

On peut prévoir en outre que la base de données ou la mémoire des cartes de jeu CJ comportent des informations sur le joueur, par exemple sur son âge, ses habitudes de jeu pour des applications de fidélisation des joueurs, de remise de parties gratuites, etc.

Nous allons présenter maintenant des protocoles de contrôle de transferts d'unités de valeur au cours d'opérations de jeu effectuées avec le procédé ou le système selon l'invention.

Au début des opérations de jeu, le transcripteur de données sur carte 210 de la machine de jeu lit le numéro d'identification en mémoire de la carte de jeu CJ1. Comme exposé précédemment au vu de la figure 2, ce numéro d'identification Id est de préférence authentifié par un module de sécurité MS1 prévu dans le transcripteur T. Le numéro Id peut éventuellement être communiqué à l'organe central de gestion 1 en vue d'authentifier la carte CJ1 avec la clef d'identification Kt1 contenue dans le module de sécurité MS0. Cette étape d'identification est de préférence effectuée une seule fois pour plusieurs opérations de jeu avec la même carte sur la même machine, la machine ou le terminal mémorisant éventuellement ce numéro d'identification Id pour les opérations suivantes.

A chaque opération de jeu suivante, le solde S des unités de valeur affecté au joueur est revu à la suite des mises ou des gains réalisés.

Selon un premier mode de réalisation de l'invention, il est prévu de communiquer simplement à l'organe central de gestion 1 des données relatives à l'opération de jeu effectuée, notamment le nouveau solde d'unités de valeur obtenu au cours de cette opération de jeu. L'organe central de gestion 1 peut ainsi stocker la liste des opérations effectuées, sous forme d'une liste des crédits ou des débits successifs enregistrés sur la carte CJ1. Cette liste des opérations Op101, Op102,... , Op10x est par exemple enregistrée dans la base de données BD sous le numéro d'identification Id1 de la carte CJ1 en cours d'utilisation.

La recopie du solde S1 ou des opérations Op101, Op102, ... , Op10x dans la base de données BD de l'organe central de gestion 1 sert alors à établir un relevé comptable des opérations ou à effectuer des vérifications fiscales. Un tel historique des opérations permet également lors d'une vérification d'une carte falsifiée de mesurer l'étendue de la fraude.

Selon un deuxième mode de réalisation de l'invention, il est prévu une étape supplémentaire consistant à vérifier que les données en mémoire de la carte CJ1 et les données de la base de données BD correspondent afin de contrôler l'intégrité d'un système constitué par une telle carte CJ1, une telle machine 200, le réseau 123 et l'organe central de gestion 1.

Deux types de vérification peuvent être prévues, la vérification pouvant porter sur le numéro d'identification Id ou sur le solde S de la carte.

La vérification du numéro d'identification Id1 de la carte CJ1 est effectuée avec une clé d'identification Kt1 comme on l'a vu précédemment. Selon ce deuxième mode de réalisation, le numéro d'identification Id est communiqué à l'organe central 1 via les moyens de liaison 123 du réseau. L'organe central 1 stocke les clés d'identification Kt1, Kt2, ..., Ktn des cartes CJ1, CJ2, ..., CJn en circulation, dans sa base de donnée BD ou de préférence dans un module de sécurisation MS0. Le module de sécurisation MS0 effectue ainsi les calculs d'identification en interne.

De plus, la vérification peut porter sur le solde d'unités de valeur de la carte CJ1. Dans ce cas, le transcripteur T lit sur la carte les données de solde S des unités de valeur et les envoie à l'organe central de gestion 1 par l'intermédiaire des moyens de liaison du réseau 123. La vérification du solde S de la carte CJ1 est alors effectuée par rapport au solde S1 indiqué dans la base de données BD sous le numéro d'identification Id1. Si les deux soldes S et Si correspondent, l'opération de jeu est autorisée par l'organe central de gestion 1.

Selon une autre alternative, la vérification peut porter sur la certification des données échangées à partir de la carte de jeu CJ1. Des algorithmes standards d'encryptage de données type algorithme DES permettent en effet de certifier les données numériques échangées entre la carte CJ1, le transcripteur T, la machine de jeu et l'organe central de gestion 1. Le cryptage et le décryptage du certificat accompagnant les données transmises n'est possible et cohérent que si on utilise une clé secrète.

Les algorithmes de cryptage de donnés de type DES comportent des séries de calculs complexes qui ne seront pas détaillés dans la présente.

Un exemple de mise en oeuvre d'algorithme DES sera exposé en considérant simplement que l'algorithme fournit un nombre crypté, appelé clef de session K', à partir d'un premier nombre donné, appelé clef d'identification K et d'un nombre aléatoire Rnd, selon l'exemple de la formule suivante :

$$K' = DES(K, Rnd)$$

La complexité des algorithmes DES rend impossible la découverte d'une clef d'identification secrète K à partir de la clef de session K' et du nombre aléatoire Rnd.

La figure 3 montre un exemple d'application d'un algorithme DES. Il permet d'illustrer des moyens de sécurisation du réseau, en particulier la sécurisation des échanges de données effectuées via les moyens de liaison du réseau. La carte de jeu dispose dans une zone mémoire inaccessible d'au moins une clé d'identification secrète Kt. Le microprocesseur de la carte génère un nombre pseudo aléatoire Rnd1. A partir de ces deux nombres Rnd1 et Kt, l'algorithme DES mis en oeuvre par le microprocesseur calcule une clef de session Kt'.

Cette clef de session Kt' peut servir de certificat d'authentification et être envoyée avec le nombre aléatoire Rnd1 et les données à certifier. Cependant, pour rendre toute découverte des clefs impossible, il est prévu d'appliquer une seconde fois l'algorithme DES. Comme visible figure 3, la carte de jeu, organe émetteur du message à certifier, demande à l'organe destinataire, l'organe central 1 par exemple, de lui fournir un second nombre aléatoire Rnd2.

L'algorithme DES est à nouveau appliqué à la clef de session Kt' et au second nombre aléatoire Rnd2 par le microprocesseur de la carte pour calculer un certificat C.

Le message de données est alors envoyé à l'organe destinataire accompagné du certificat C et du nombre aléatoire Rnd1 calculés par la carte. Ainsi les clefs utilisées, en particulier la clef d'identification secrète Kt, ne sont pas échangées.

L'authentification du message de données est effectué en recalculant un certificat C' à partir des même données. L'organe central de gestion 1 dispose dans son module sécurisé MSO de la clef d'identification secrète Kt. Le module sécurisé MSO peut donc calculer la clef de session Kt' à partir de la clef d'identification Kt et du nombre aléatoire Rnd1.

Le module sécurisé MS0 dispose encore du nombre aléatoire Rnd2 qu'il a fourni précédemment à la carte de jeu. A partir de ces deux nombres Rnd2 et Kt', le module de sécurité MS0 calcule à nouveau un certificat C' en appliquant une seconde fois l'algorithme DES.

En vérifiant que le certificat C calculé par la carte correspond au certificat C' recalculé par son module de sécurité, l'organe central peut authentifier le message de donnée reçu.

Notons que la clé de session Kt' et le certificat C sont recalculés à chaque certification de message désirée. On évite ainsi qu'une machine pirate du réseau obtienne l'accès à la base de donnée ou à la mémoire de la carte en recopiant une certification précédente.

Après avoir effectué une ou plusieurs de ces vérifications, l'organe central 1 envoie un signal d'accord qui peut être crypté ou encodé. Avec un tel signal d'accord, le joueur peut utiliser sa carte de jeu CJ1, effectuer des mises, des opérations de jeu et recharger sa carte avec ses gains.

Dans ces deux premiers modes de réalisation, on a vu que la carte a une fonction d'identification, son numéro Id permettant à l'organe central 1 ou à la machine de jeu de la reconnaître voire de reconnaître le joueur dans certaines applications de fidélisation de clientèle. De plus, la carte a une fonction de porte-monnaie, le solde d'unités de valeur étant stocké dans la carte et connu essentiellement par la carte, la recopie de solde dans l'organe central 1 servant aux fins de vérification.

Selon un troisième mode de réalisation, la fonction porte-monnaie n'est plus assurée par la carte mais par l'organe central de gestion lui-même. La carte ne comporte alors aucune donnée relative au solde du joueur mais uniquement des données d'identification, telles que le numéro d'identification Id, plusieurs clefs Kta, Ktb, Ktc d'authentification et éventuellement des informations sur le joueur. Les données de solde S1 des unités de valeur sont alors uniquement stockées dans la base de données BD de l'organe central de gestion 1. Ce compte d'unités de valeur se trouve par exemple dans la base de données sous le numéro d'identification Id1.

Lors d'une opération de jeu, le numéro d'identification Id de la carte CJ1 est envoyé à l'organe central de gestion 1 via les moyens de liaison 123 du réseau. Le numéro d'identification Id peut être envoyé directement par la machine de jeu 200 ou par son transcripteur 210 s'il a été mémorisé par la machine ou par son transcripteur. Le numéro d'identification Id peut aussi être lu sur la carte et envoyé à l'organe central de gestion 1 par le transcripteur 210 à chaque opération de jeu.

Après vérification du numéro d'identification Id, l'organe central de gestion 1 consulte la base de données BD et envoie à la machine de jeu 200 le solde S1 des unités de valeur affecté à la carte CJ1.

De préférence le transfert des données de solde d'unités de valeur est effectué avec un certificat selon le protocole de sécurisation des échanges de données présenté précédemment.

Un avantage de ce troisième mode de réalisation est que les montants mis en jeu sont stockés dans l'organe central de gestion 1, ce qui évite toute mémorisation de valeur au niveau des cartes de jeu.

Selon ce troisième mode de réalisation, il est donc prévu de stocker, dans la base de données des moyens centralisés de gestion, les données représentatives du solde des valeurs débitées et/ou créditées afin d'éviter une fraude à partir d'une carte à puce.

Le contrôle consiste simplement dans ce troisième mode de réalisation à vérifier le numéro d'identification Id de la carte de jeu CJ1 avec une clé d'identification Kt1 lue dans la base de données BD de l'organe central de gestion 1 afin de contrôler l'intégrité de la carte.

Avec ces trois modes de réalisation de l'invention on a vu qu'on peut avantageusement contrôler l'intégrité des cartes de jeu utilisées sur les machines de jeu.

De plus, en mettant en oeuvre des moyens de sécurisation des échanges de données, l'invention permet avantageusement de vérifier l'intégrité d'un système formé par les cartes de jeu, le réseau de machines de jeu et la base de données de l'organe central de gestion, l'intégrité d'un des trois éléments du système, soit une carte de jeu, soit le réseau, soit la base de données étant vérifiée à l'aide des deux autres éléments.

L'invention prévoit en effet un système apte à mettre en oeuvre le procédé selon l'invention.

Un tel système comporte une pluralité de machines de jeu, chaque machine étant pourvue d'un transcripteur apte à débiter des unités de valeur d'une carte de jeu, les machines étant reliées en réseau avec un organe central de gestion par l'intermédiaire de moyens de liaison.

Selon l'invention, les données représentatives des opérations de jeu effectuées avec une carte à puce sur une machine de jeu sont stockées en mémoire de la carte de jeu et parallèlement dans une base de données prévue dans l'organe central de gestion.

Les données stockées sont notamment les données d'identification de la carte et le solde ou les soldes successifs d'unités de valeur débitées et/ou créditées avec la carte.

Des moyens de contrôle tels qu'un programme d'ordinateur effectuant l'authentification du numéro d'identification de la carte ou la comparaison des valeurs de solde stockées sur la carte et dans la base ou encore la certification des données échangées sont prévus afin de vérifier l'intégrité du système.

De préférence, pour sécuriser les échanges de données sur le réseau, il est prévu qu'un module de sécurisation calcule un certificat d'authentification à partir de données secrètes stockées en mémoire du module et en ce que les moyens de contrôle vérifient que le certificat d'authentification calculé par le module de sécurisation correspond au certificat d'authentification calculé par la carte de jeu ou par un autre module de sécurisation.

De tels modules de sécurisation MS0, MS1 peuvent être disposés dans les cartes du jeu CJ1, CJ2, ..., CJn, ou au niveau des transcripteurs 10, 110, 210, 210', 210'', 210''', 310, des machines de jeu 200, 200', 200'', 200''', de l'organe central de gestion 1 ou même sur les moyens de liaison 123 du réseau.

On peut en particulier prévoir plusieurs modules ou des moyens répartis de sécurisation au sein du réseau. Chaque transcripteur 10, 210, 210', 210'', 210''', ou chaque interface 11, 120, 120', 120'', 120''' comprend par exemple un module de sécurisation de sorte que les échanges de données sur les moyens de liaison 123 son accompagnés de certificat d'authentification. Par exemple le transcripteur 10 émetteur ajoute à son message son certificat qui est authentifié par le transcripteur 210 destinataire avant d'être transmis à la machine 200 correspondante.

D'autres variantes de réalisation, avantages et caractéristiques de l'invention, apparaîtront à l'homme du métier sans sortir du cadre des revendications ci-après.

## Revendications

1. Procédé sécurisé de contrôle de transferts d'unités de valeur entre une pluralité de cartes de jeu (CJ, CJ1, CJ2, CJn) et une pluralité de machines de jeu (200, 200', 200'', 200''', 300, 300', 300''), chaque machine (200) étant connectée à un transcripteur (210) de données sur carte de jeu (CJ2), les machines étant reliées en réseau sécurisé avec un organe central de gestion (1) par l'intermédiaire de moyens de liaison (123), le procédé comportant des étapes consistant, au cours d'une opération de jeu, à :

   - lire des données d'identification (Id) et/ou des données de valeur (S, Op1, Op1, Op2, Opx) en mémoire d'une carte de jeu (CJ1),
   - échanger des données correspondant à l'identification et/ou à la valeur de la carte de jeu entre la machine (200) et une base de données (BD) de l'organe central de gestion (1) par l'intermédiaire des moyens de liaison (123) du réseau, et
   - vérifier que les données en mémoire de la carte de jeu (CJ1) correspondent aux données de la base de données (BD),

   le procédé étant **caractérisé en ce qu'**un échange de données est accompagné d'un certificat d'authentification (C) calculé à partir de données secrètes (Kt, Kt') d'authentification et/ou d'identification, et en ce que les données échangées sont authentifiées en vérifiant chaque certificat d'authentification.

2. Procédé selon la revendication 1, caractérisé par une étape préliminaire aux opérations de jeu, consistant à :

- inscrire, dans la base de données (BD) de l'organe central de gestion (1) et dans la mémoire d'une carte de jeu (CJ1), des données représentatives d'un solde (S, S1) initial d'unités de valeur lors d'une opération préliminaire de chargement de la carte.

3. Procédé selon l'une des revendications précédentes, caractérisé par une étape consistant, au cours d'une opération de jeu, à :

- inscrire, dans la base de données (BD) de l'organe central de gestion (1), des données représentatives du solde (S1) des unités de valeur de la carte de jeu (CJ1).

4. Procédé selon l'une des revendications précédentes, caractérisé par une étape consistant, au cours d'une opération de jeu, à :

- recevoir les données représentatives du solde (S1) des unités de valeur à partir de l'organe central de gestion (1) afin d'éviter une fraude à partir d'une carte (CJ2) ou d'une machine de jeu (200).

5. Procédé selon l'une des revendications précédentes, **caractérisé en ce que** l'étape de vérification consiste à :

- vérifier les données représentatives de solde (S) des unités de valeur lues en mémoire de la carte de jeu (CJ1) par rapport aux données (S1) lues dans la base de données (BD) afin de contrôler l'intégrité de la carte de jeu (CJ1).

6. Procédé selon l'une des revendications précédentes, **caractérisé en ce que** l'étape de vérification consiste à :

- vérifier le numéro d'identification (Id) de la carte de jeu (CJ1) avec une clé d'identification (Kt1) lue dans la base de données (BD) de l'organe central de gestion (1) afin de contrôler l'intégrité de la carte de jeu (CJ1).

7. Procédé selon l'une des revendications précédentes, **caractérisé en ce que** le réseau comporte en outre des moyens de sécurisation (MS0), le procédé comportant une étape supplémentaire consistant à :

- prévoir que les moyens de sécurisation (MS0) du réseau calculent un certificat d'authentification (C') à partir de données secrètes (Kt, Kt') en mémoire des moyens de sécurisation.

8. Procédé selon la revendication 7, caractérisé par une étape supplémentaire consistant à :

- lire un certificat d'authentification (C) calculé par la carte de jeu (CJ1) à partir de données secrètes (Kt, Kt1) en mémoire de la carte.

9. Procédé selon la revendication 8, **caractérisé en ce que** l'étape de vérification consiste à :

- vérifier que le certificat d'authentification (C) calculé par la carte de jeu (CJ1) correspond au certificat d'authentification (C') calculé par les moyens de sécurisation (MSO) du réseau.

10. Procédé selon l'une des revendications précédentes, **caractérisé en ce que** le réseau comporte en outre des moyens de sécurisation répartis (MSO, MS1), le procédé comportant des étapes supplémentaires consistant à :

- prévoir que des premiers moyens de sécurisation (MS0) du réseau calculent un premier certificat d'authentification (C') à partir de données secrètes (Kt, Kt') en mémoire des premiers moyens de sécurisation (MS0), et
- prévoir que des seconds moyens de sécurisation (MS1) du réseau calculent un second certificat d'authentification à partir de données secrètes en mémoire des seconds moyens de sécurisation (MS1), et
- vérifier que le premier certificat d'authentification (C') calculé par les premiers moyens de sécurisation (MS0) du réseau correspond au second certificat d'authentification calculé par les seconds moyens de sécurisation (MS1) du réseau.

11. Procédé selon l'une des revendications 7 à 10, **caractérisé en ce que** les données (Id, S) échangées entre la machine (200) et la base de données (BD) de l'organe central de gestion (1) sont accompagnées d'un certificat d'authentification (C, C').

12. Procédé selon l'une des revendications précédentes, **caractérisé en ce que** des moyens de sécurisation (MS1) sont associés au transcripteur (T, 10, 110, 210) de données sur carte de jeu (CJ1) afin de contrôler l'intégrité d'une telle carte.

13. Procédé selon l'une des revendications précédentes, **caractérisé en ce que** des moyens de sécurisation (MS1) sont associés à une machine de jeu (T, 200, 300).

14. Procédé selon l'une des revendications précédentes, **caractérisé en ce que** des moyens de sécurisation sont associés aux moyens de liaison du réseau.

**15.** Procédé selon l'une des revendications précédentes, **caractérisé en ce que** des moyens de sécurisation (MS0) sont associés à l'organe central de gestion (1) afin de contrôler l'intégrité du réseau.

**16.** Système sécurisé de contrôle de transferts d'unités de valeur entre une pluralité de cartes de jeu (CJ) et une pluralité de machines de jeu (200, 300), chaque machine étant pourvue d'un transcripteur (210, 310) apte à débiter des unités de valeur d'une carte de jeu (CJ), les machines étant reliées en réseau sécurisé avec un organe central de gestion (1) par l'intermédiaire de moyens de liaison (123), une carte de jeu (CJ1) stockant en mémoire des données d'identification (Id) et/ou des données de valeur (S, Op1, Op2, Opx), l'organe central de gestion (1) comportant une base de données (BD) stockant parallèlement en mémoire les données d'identification (Id1, Id2, Idn) et/ou les données de valeur (S1, S2, Sn) des cartes (CJ1, CJ2, CJn), le système comportant des moyens de contrôle (BD) aptes à vérifier que, pour une carte identifiée, les données de la base (BD) et les données de la carte (CJ1) correspondent,
**caractérisé en ce que** le système comporte des moyens d'authentification de données aptes à calculer un certificat d'authentification, à partir de données secrètes stockées en mémoire.

**17.** Système sécurisé selon la revendication 16, **caractérisé en ce que** la carte de jeu (CJ1) calcule un certificat d'authentification (C) à partir de données secrètes (Kt, Kt') stockées en mémoire de la carte (CJ1).

**18.** Système sécurisé selon la revendication 16 ou la revendication 17, **caractérisé en ce qu'**il comporte en outre au moins un module de sécurisation (MS0, MS1), le module de sécurisation calculant un certificat d'authentification (C') à partir de données secrètes (Kt, Kt') stockées en mémoire du module (MS0) et en ce que les moyens de contrôle (MS0) vérifient que le certificat d'authentification (C') calculé par le module de sécurisation correspond au certificat d'authentification (C) calculé par la carte de jeu ou par un autre module de sécurisation (MS1).

**19.** Système sécurisé selon la revendication 18, **caractérisé en ce qu'**un module de sécurisation (MS1) est disposé dans le transcripteur (T, 10, 210, 310).

**20.** Système sécurisé selon l'une des revendications 18 et 19, **caractérisé en ce qu'**un module de sécurisation (MS0) est disposé dans une machine de jeu (200).

**21.** Système sécurisé selon l'une des revendications 18 à 20, **caractérisé en ce qu'**un module de sécurisation est disposé sur les moyens de liaison du réseau.

**22.** Système sécurisé selon l'une des revendications 18 à 21, **caractérisé en ce qu'**un module de sécurisation (MS0) est disposé dans l'organe central de gestion (1).

**23.** Système sécurisé selon l'une des revendications 16 à 22, **caractérisé en ce qu'**une carte de jeu est une carte à puce.

**24.** Système sécurisé selon l'une des revendications 16 à 23, **caractérisé en ce qu'**une carte de jeu est une carte sans contact.

**25.** Système sécurisé selon l'une des revendications 16 à 24, **caractérisé en ce qu'**une carte de jeu est une carte bancaire.

**Patentansprüche**

**1.** Gesichertes Transferprüfverfahren von Werteinheiten zwischen einer Vielzahl von Spielkarten (CJ, CJ1, CJ2, CJn) und einer Vielzahl von Spielmaschinen (200, 200', 200'', 200''', 300, 300', 300''), wobei jede Maschine (200) an eine Übertragungsvorrichtung (210) von Daten auf die Spielkarten (CJ2) angeschlossen ist, wobei die Maschinen über Verbindungsmittel (123) gesichert mit einem zentralen Verwaltungsorgan (1) vernetzt sind, wobei das Verfahren Etappen umfasst, die während einer Spieloperation darin bestehen:

- Identifikationsdaten (Id) und/oder Wertdaten (S, Op1, Op1, Op2, Opx) zu lesen, die in einer Spielkarte (CJ1) gespeichert sind,
- der Identifikation und/oder dem Wert der Spielkarte entsprechende Daten zwischen der Maschine (200) und einer Datenbasis (BD) des zentralen Verwaltungsorgans (1) über Verbindungsmittel (123) des Netzes auszutauschen, und
- zu überprüfen, dass die in der Spielkarte (CJ1) gespeicherten Daten den Daten der Datenbasis (BD) entsprechen,

**dadurch gekennzeichnet**, dass ein Datenaustausch von einen aus geheimen Authentifizierungs- und/oder Identifikationsdaten (Kt, Kt') errechneten Authentifizierungszertifikat (C) begleitet wird, und dass die ausgetauschten Daten durch die Prüfung eines jeden Authentifizierungszertifikats authentifiziert werden.

**2.** Verfahren nach Anspruch 1, gekennzeichnet durch eine den Spieloperationen vorausgehenden Etappe, die darin besteht:

- in die Datenbasis (BD) des zentralen Verwaltungsorgans (1) und in den Speicher einer Spielkarte (CJ1) Daten einzutragen, die bei einer dem Laden der Karte vorausgehenden Operation einen ursprünglichen Saldo (S, S1) von Werteinheiten darstellen.

3. Verfahren nach einem der vorgenannten Ansprüche, gekennzeichnet durch eine Etappe, die darin besteht, während einer Spieloperation:

- in die Datenbasis (BD) des zentralen Verwaltungsorgans (1) Daten einzutragen, die den Saldo (S1) der Werteinheiten der Spielkarte (CJ1) darstellen.

4. Verfahren nach einem der vorgenannten Ansprüche, gekennzeichnet durch eine Etappe, die darin besteht, während einer Spieloperation:

- die den Saldo (S1) der Werteinheiten darstellende Daten von einem zentralen Verwaltungsorgan (1) zu empfangen, um einen Missbrauch ab einer Karte (CJ2) oder einer Spielmaschine (200) zu verhindern.

5. Verfahren nach einem der vorgenannten Ansprüche, **dadurch gekennzeichnet**, dass die Prüfetappe darin besteht:

- die den Saldo (S) der aus dem Speicher der Spielkarte (CJ1) ausgelesenen Werteinheiten darstellenden Daten in Bezug auf die aus der Datenbasis (BD) ausgelesenen Daten (S1) zu prüfen, um die Unversehrtheit der Spielkarte (CJ1) zu kontrollieren.

6. Verfahren nach einem der vorgenannten Ansprüche, **dadurch gekennzeichnet**, dass die Prüfetappe darin besteht:

- die Identifikationsnummer (Id) der Spielkarte (CJ1) mit einem aus der Datenbasis (BD) des zentralen Verwaltungsorgans (1) ausgelesenen Identifikationsschlüssel (Kt1) zu prüfen, um die Unversehrtheit der Spielkarte (CJ1) zu prüfen.

7. Verfahren nach einem der vorgenannten Ansprüche, **dadurch gekennzeichnet**, dass das Netz im übrigen Sicherungsmittel (MSO) aufweist, wobei das Verfahren eine zusätzliche Etappe umfasst, die darin besteht:

- vorzusehen, dass die Sicherungsmittel (MSO) des Netzes aus den im Speicher der Sicherungsmittel enthaltenen geheimen Daten (Kt, Kt') ein Authentifizierungszertifikat (C') errechnen.

8. Verfahren nach Anspruch 7, gekennzeichnet durch eine zusätzliche Etappe, die darin besteht:

- ein von der Spielkarte (CJ1) aus in der Karte gespeicherten geheimen Daten (Kt, Kt1) errechnetes Authentifizierungszertifikat (C) zu lesen.

9. Verfahren nach Anspruch 8, **dadurch gekennzeichnet**, dass die Prüfetappe darin besteht:

- zu prüfen, dass das von der Spielkarte (CJ1) errechnete Authentifizierungszertifikat (C) dem von den Sicherungsmitteln (MSO) des Netzes errechneten Authentifizierungszertifikat (C') entspricht.

10. Verfahren nach einem der vorgenannten Ansprüche, **dadurch gekennzeichnet**, dass das Netz im übrigen verteilte Sicherungsmittel (MS0, MS1) aufweist, wobei das Verfahren zusätzliche Etappen umfasst, die darin bestehen:

- vorzusehen, dass die ersten Sicherungsmittel (MS0) des Netzes aus den in den ersten Sicherungsmitteln (MS0) gespeicherten geheimen Daten (Kt, Kt') ein erstes Authentifizierungszertifikat (C') errechnen, und
- vorzusehen, dass die zweiten Sicherungsmittel (MS1) des Netzes aus den in den zweiten Sicherungsmitteln (MS1) gespeicherten geheimen Daten ein zweites Authentifizierungszertifikat errechnen, und
- zu prüfen, dass das von den ersten Sicherungsmitteln (MS0) des Netzes errechnete erste Authentifizierungszertifikat (C') dem von den zweiten Sicherungsmitteln (MS1) des Netzes errechneten zweiten Authentifizierungszertifikat entspricht.

11. Verfahren nach einem der Ansprüche 7 bis 10, **dadurch gekennzeichnet**, dass die zwischen der Maschine (200) und der Datenbasis (BD) des zentralen Verwaltungsorgans (1) ausgetauschten Daten (Id, S) von einem Authentifizierungszertifikat (C, C') begleitet werden.

12. Verfahren nach einem der vorgenannten Ansprüche, **dadurch gekennzeichnet**, dass die Sicherungsmittel (MS1) der Übertragungsvorrichtung (T, 10, 110, 210) der Daten auf die Spielkarte (CJ1) zugeordnet ist, um die Unversehrtheit einer derartigen Karte zu prüfen.

**13.** Verfahren nach einem der vorgenannten Ansprüche, **dadurch gekennzeichnet**, dass die Sicherungsmittel (MS1) einer Spielmaschine (T, 200, 300) zugeordnet sind.

**14.** Verfahren nach einem der vorgenannten Ansprüche, **dadurch gekennzeichnet**, dass die Sicherungsmittel Verbindungsmitteln des Netzes zugeordnet sind.

**15.** Verfahren nach einem der vorgenannten Ansprüche, **dadurch gekennzeichnet**, dass die Sicherungsmittel (MS0) dem zentralen Verwaltungsorgan (1) zugeordnet sind, um die Unversehrtheit des Netzes zu prüfen.

**16.** Gesichertes Transferprüfsystem von Werteinheiten zwischen einer Vielzahl von Spielkarten (CJ) und einer Vielzahl von Spielmaschinen (200, 300), wobei jede Maschine über eine Übertragungsvorrichtung (210, 310) verfügt, die Werteinheiten von einer Spielkarte (CJ) abziehen kann, wobei die Maschinen gesichert über Verbindungsmittel (123) mit einem zentralen Verwaltungsorgan (1) vernetzt sind, wobei in einer Spielkarte (CJ1) Identifikationsdaten (Id) und/oder Wertdaten (S, Op1, Op2, Opx) gespeichert sind, wobei das zentrale Verwaltungsorgan (1) eine Datenbasis (BD) umfasst, in der gleichzeitig die Identifikationsdaten (Id1, Id2, Idn) und/oder die Wertdaten (S1, S2, Sn) der Karten (CJ1, CJ2, CJn) gespeichert sind, wobei das System Prüfmittel (BD) umfasst, die in der Lage sind, für eine identifizierte Karte zu prüfen, dass die Daten der Basis (BD) und die Daten der Karte (CJ1) übereinstimmen, **dadurch gekennzeichnet**, dass das System Datenauthentifizierungsmittel umfasst, die aus gespeicherten geheimen Daten ein Authentifizierungszertifikat errechnen können.

**17.** Gesichertes System nach Anspruch 16, **dadurch gekennzeichnet**, dass die Spielkarte (CJ1) aus in der Karte (CJ1) gespeicherten geheimen Daten (Kt, Kt') ein Authentifizierungszertifikat (C) errechnet.

**18.** Gesichertes System nach Anspruch 16 oder 17, **dadurch gekennzeichnet**, dass es im übrigen mindestens ein Sicherungsmodul (MS0, MS1) umfasst, wobei das Sicherungsmodul aus im Modul (MS0) gespeicherten geheimen Daten (Kt, Kt') ein Authentifizierungszertifikat (C') errechnet, und dass die Prüfmittel (MS0) kontrollieren, dass das vom Sicherungsmodul errechnete Authentifizierungszertifikat (C') dem von der Spielkarte oder von einem anderen Sicherungsmodul (MS1) errechneten Authentifizierungszertifikat (C) entspricht.

**19.** Gesichertes System nach Anspruch 18, **dadurch gekennzeichnet**, dass ein Sicherungsmodul (MS1) in der Übertragungsvorrichtung (T, 10, 210, 310) angeordnet ist.

**20.** Gesichertes System nach einem der Ansprüche 18 und 19, **dadurch gekennzeichnet**, dass ein Sicherungsmodul (MS0) in einer Spielmaschine (200) angeordnet ist.

**21.** Gesichertes System nach einem der Ansprüche 18 bis 20, **dadurch gekennzeichnet**, dass ein Sicherungsmodul auf den Verbindungsmitteln des Netzes angeordnet ist.

**22.** Gesichertes System nach einem der Ansprüche 18 bis 21, **dadurch gekennzeichnet**, dass ein Sicherungsmodul (MS0) im zentralen Verwaltungsorgan (1) angeordnet ist.

**23.** Gesichertes System nach einem der Ansprüche 16 bis 22, **dadurch gekennzeichnet**, dass eine Spielkarte eine Chipkarte ist.

**24.** Gesichertes System nach einem der Ansprüche 16 bis 23, **dadurch gekennzeichnet**, dass eine Spielkarte eine kontaktlose Karte ist.

**25.** Gesichertes System nach einem der Ansprüche 16 bis 24, **dadurch gekennzeichnet**, dass eine Spielkarte eine Bankkarte ist.

**Claims**

**1.** A secure method of controlling transfers of units of value between a plurality of gaming cards (CJ, CJ1, CJ2, CJn) and a plurality of gaming machines (200, 200', 200", 200''', 300, 300', 300"), each machine (200) being connected to a transcriber (210) for transcribing data onto a gaming card (CJ2), the machines being connected in a secure network with a central management device (1) by means of connection means (123), the method containing steps consisting, during a gaming operation, in:

- reading identification data (Id) and/or value data (S, Op1, Op1, Op2, Opx) in the memory of a gaming card (CJ1) ,
- exchanging data corresponding to the identification and/or to the value of the gaming card between the machine (200) and a database (BD) of the central management device (1) by means of the connection means (123) of the network, and
- verifying that the data in the memory of the gaming card (CJ1) correspond to the data in the database (BD),

    the method being **characterised in that** an exchange of data is accompanied by an authentication certificate (C) calculated from secret authentication and/or identification data (Kt, Kt'), and in that the exchanged data are authenticated by verifying each authentication certificate.

2. Method according to Claim 1, characterised by a step preliminary to the gaming operations, consisting in:

   - entering, in the database (BD) of the central management device (1) and in the memory of a gaming card (CJ1), data representing an initial balance (S, S1) of units of value during a preliminary operation of loading the card.

3. A method according to one of the preceding claims, characterised by a step consisting, during a gaming operation, in:

   - entering, in the database (BD) of the central management device (1), data representing the balance (S1) of the units of value of the gaming card (CJ1).

4. A method according to one of the preceding claims, characterised by a step consisting, during a gaming operation, in:

   - receiving the data representing the balance (S1) of the units of value from the central management device (1) in order to prevent fraud from a card (CJ2) or a gaming machine (200).

5. A method according to one of the preceding claims, **characterised in that** the verification step consists in:

   - verifying the data representing a balance (S) of the units of value read in the memory of the gaming card (CJ1) compared with the data (S1) read in the database (BD) in order to check the integrity of the gaming card (CJ1).

6. A method according to one of the preceding claims, **characterised in that** the verification step consists in:

   - verifying the identification number (Id) of the gaming card (CJ1) with an identification key (Kt1) read in the database (BD) of the central management device (1) in order to check the integrity of the gaming card (CJ1).

7. A method according to one of the preceding claims, **characterised in that** the network also has protection means (MS0), the method including a supplementary step consisting in:

   - making provision for the protection means (MS0) of the network to calculate an authentication certificate (C') from secret data (Kt, Kt') in the memory of the protection means.

8. A method according to Claim 7, characterised by a supplementary step consisting in:

   - reading an authentication certificate (C) calculated by the gaming card (CJ1) from secret data (Kt, Kt1) in the card memory.

9. A method according to Claim 8, **characterised in that** the verification step consists in:

   - checking that the authentication certificate (C) calculated by the gaming card (CJ1) corresponds to the authentication certificate (C') calculated by the protection means (MS0) of the network.

10. A method according to one of the preceding claims, **characterised in that** the network also has distributed protection means (MS0, MS1), the method including supplementary steps consisting in:

    - making provision for first protection means (MS0) of the network to calculate a first authentication certificate (C') from secret data (Kt, Kt') in the memory of the first protection means (MS0), and
    - making provision for the second protection means (MS1) of the network to calculate a second authentication certificate from secret data in the memory of the second protection means (MS1), and
    - checking that the first authentication certificate (C') calculated by the first protection means (MS0) of the network corresponds to the second authentication certificate calculated by the second protection means (MS1) of the network.

11. A method according to one of Claims 7 to 10, **characterised in that** the data (Id, S) exchanged between the machine (200) and the database (BD) of the central management device (1) are accompanied by an authentication certificate (C, C').

12. A method according to one of the preceding claims, **characterised in that** protection means (MS1) are associated with the transcriber (T, 10, 110, 210) for transcribing data onto a gaming card (CJ1) in order to check the integrity of such a card.

13. A method according to one of the preceding claims, **characterised in that** protection means (MS1) are associated with a gaming machine (T, 200, 300).

**14.** A method according to one of the preceding claims, **characterised in that** protection means are associated with the network connection means.

**15.** A method according to one of the preceding claims, **characterised in that** protection means (MS0) are associated with the central management device (1) in order to check the integrity of the network.

**16.** A secure system for controlling transfers of units of value between a plurality of gaming cards (CJ) and a plurality of gaming machines (200, 300), each machine being provided with a transcriber (210, 310) able to debit units of value from a gaming card (CJ), the machines being connected in a secure network with a central management device (1) by means of connection means (123), a gaming card (CJ1) storing in memory identification data (Id) and/or value data (S, Op1, Op2, Opx), the central management device (1) having a database (BD) storing in parallel in memory the identification data (Id1, Id2, Idn) and/or the value data (S1, S2, Sn) of the cards (CJ1, CJ2, CJn), the system having check means (BD) able to check that, for an identified card, the data in the base (BD) and the data in the card (CJ1) correspond,
**characterised in that** the system includes data authentication means able to calculate an authentication certificate, from secret data stored in memory.

**17.** A secure system according to Claim 16, **characterised in that** the gaming card (CJ1) calculates an authentication certificate (C) from secret data (Kt, Kt') stored in memory in the card (CJ1).

**18.** A secure system according to Claim 16 or Claim 17, **characterised in that** it also has a protection module (MS0, MS1), the protection module calculating an authentication certificate (C') from secret data (Kt, Kt') stored in the memory of the module (MS0) and in that the check means (MS0) check that the authentication certificate (C') calculated by the protection module corresponds to the authentication certificate (C) calculated by the gaming card or by another protection module (MS1).

**19.** A secure system according to Claim 18, **characterised in that** a protection module (MS1) is disposed in the transcriber (T, 10, 210, 310).

**20.** A secure system according to one of Claims 18 and 19, **characterised in that** a protection module (MS0) is disposed in a gaming machine (200).

**21.** A secure system according to one of Claims 18 to 20, **characterised in that** a protection module is disposed on the network connection means.

**22.** A secure system according to one of Claims 18 to 21, **characterised in that** a protection module (MS0) is disposed in the central management device (1).

**23.** A secure system according to one of Claims 16 to 22, **characterised in that** a gaming card is a smart card.

**24.** A secure system according to one of Claims 16 to 23, **characterised in that** a gaming card is a contactless card.

**25.** A secure system according to one of Claims 16 to 24, **characterised in that** a gaming card is a bank card.

FIG_1

EP 0 981 808 B1

# FIG_2

CJ1

| Id | S |
| | Op1 |
| Kt | Op2 |
| | Opx |

T

Kta
Ktb
Ktc

MS1

| Id1 | Kt1 |
| Id2 | Kt2 |
| --- | --- |
| Idn | Ktn |

BD · 1 · MS0

| Id1 | S1 | Op101 | Op102 | Op10x |
| Id2 | S2 | Op201 | Op202 | Op20x |
| Idn | Sn | Opn01 | --- | --- |

| Id1 | Kt1 |
| Id2 | Kt2 |
| --- | --- |
| Idn | Ktn |

# FIG_3

—Rnd1—

$Kt' = DES(Kt, Rnd1)$

$C = DES(Kt', Rnd2)$

(Rnd2)

(C, Rnd1)

—Rnd2—

$Kt' = DES(Kt, Rnd1)$
$C' = DES(Kt', Rnd2)$
$C = C'?$

OK